# EUROPEAN PATENT SPECIFICATION

(11) **EP 0 961 816 B1**
(45) Date of publication and mention of the grant of the patent: **16.01.2002**
(21) Application number: 98905098.4
(22) Date of filing: 18.02.1998
(51) Int. Cl.: C09D 123/06

(54) **HIGH GLOSS POLYETHYLENE COATING**
HOCHGLANZ POLYETHYLEN BESCHICHTUNG
REVETEMENT A BASE DE POLYETHYLENE A BRILLANT ELEVE

(30) Priority: 19.02.1997 US 36297 P; 13.02.1998 US 23900
(43) Date of publication of application: 08.12.1999
(73) Proprietor: EASTMAN CHEMICAL COMPANY, Kingsport, TN 37660 (US)
(72) Inventor: EDWARDS, Ray, Henderson, TX 75652 (US); BEALL, Whitney, Kay, Longview, TX 75605 (US)
(74) Representative: Wibbelmann, Jobst, Dr., Dipl.-Chem.
(86) International application number: US9802944
(87) International publication number: WO9837158

(56) References cited:
- US-A- 5 350 476
- US-A- 5 395 471

## Description

### CROSS-REFERENCE TO RELATED APPLICATIONS

This application claims benefit of priority under 35 USC §119 of Provisional Application Serial No. 60/036,297, filed 2/19/97.

### FIELD OF THE INVENTION

The present invention is directed to a polyethylene composition providing printable, high-gloss coatings.

### BACKGROUND OF THE INVENTION

High-gloss extrusion coatings are an important attribute of a packaging material. In particular, high gloss coatings are considered a selling point in the retail trade for flexible packaging, such as wrappers for food and clothing. See, for instance, "Extrusion Resin Review", CONVERTING MAGAZINE, February, 1992, pg. 48. Gloss, or specular reflectance, of a surface is a measure of the light reflected by that surface as compared to that which would be reflected by a perfect mirror. A gloss value of 100 is 1/10th of the assigned value of 1,000 for a perfect mirror. Gloss is typically measured at 75° and/or 60° (from the vertical) in accordance with ASTM D2457.

The use of polypropylenes for high-gloss applications is well-known. A typical extrusion coating-grade polypropylene can exhibit a 75° surface gloss of about 86 (see U.S. Pat. No. 5,350,476). However, polypropylenes must contain stabilizers to prevent chemical, thermal, and mechanical degradation. These stabilizers prevent the coating surface from readily receiving oxidative treatment necessary for accepting printing inks.

Polyethylenes, which do not require any stabilizers, will readily accept oxidation and are thus printable. However, until recently, extrusion coating grade polyethylenes did not produce coatings with a surface gloss comparable to polypropylene. For instance, U.S. Patent No. 4,427,833, issued to one of the present inventors, discloses an extrusion coating composition comprising low density polyethylene having a density of 0.916 to 0.926, a melt index at 190°C of 0.1 to 2.0, and a swell ratio of 1.4 to 1.7. This composition is capable of providing a coating having a thickness of about 0.0254 mm or less at coating speeds of at least 4 meters per second. However, the coating set forth in this patent did not have an acceptable gloss (i.e., no higher than about 80, measured as 75° Surface Gloss) and in particular is not nearly comparable in gloss to a coating provided by polypropylene.

Thus, there was still a problem of providing a high-gloss, printable packaging using a single layer, i.e., a single "dual-purpose" coating. Typically, packaging was provided having a first layer of high gloss polypropylene and a second layer of printable polyethylene.

Recently, in U.S. Pat. Nos. 5,350,476 and 5,268,230, one of the present inventors surprisingly discovered that a glossy, oxidizable, extrusion coating could be made of a single, dual purpose outer layer consisting essentially of a polyethylene component. The high gloss printable polyethylene coating was provided by extruding, onto a substrate against a high gloss chill roll, a low density polyethylene having a melt index of 2 to 4 dg/min at 190°C, a swell ratio of 1.2 to 1.3, an annealed density of 0.92 to 0.93 g/cc, and a polydispersity index of between 6 to 9. The coating exhibited a 75° Surface Gloss measurement of, for example, about 90. A printable coating of polyethylene having surface gloss superior to that provided by polypropylene is quite remarkable.

However, a lower melt index polyethylene material is desired for certain applications. Generally, polyethylene having a lower melt index provides for tougher seals, high stress crack resistance, and superior hot tack ("pop-open" resistance), when used as a coating in, for instance, milk cartons and the like. Lower melt index materials are more difficult to extrude. Moreover, known extrusion coating grade polyethylenes, including those having low melt indexes, tended to have high swell ratios. Generally, polyethylenes having low melt indexes combined with high swell ratios exhibit very low neck-ins during the extrusion coating process. Low neck-ins result in non-uniform coating weights and non-uniform thicknesses, along with extrudate tear-offs, all of which lead to unsatisfactory products.

Thus, an oxidizable polyethylene having both a low melt index and a low swell ratio and extrusion coatable onto, for instance, paper, was heretofore unknown.

### SUMMARY OF THE INVENTION

The present inventors have surprisingly discovered a polyethylene composition that provides for an extrusion coating that is printable and has a gloss comparable to polypropylene, and which, in preferred embodiments, exhibits superior neck-in properties, provides for tougher seals and having higher stress-crack resistance, and having superior hot tack.

More specifically, the present invention concerns a polyethylene material having a melt index of 0.5 to 2.0 dg/min at 190°C, a swell ratio of 1.2 to 1.35, an annealed density of 0.91 to 0.93 g/cc, and a polydispersity index at or below 9.

Accordingly, one object of the invention is to provide for a single, dual-purpose coating, having a printable surface comparable to oxidized polyethylene and at the same time exhibiting a visually-appealing gloss comparable to and even superior to that of polypropylene.

Another object of the invention is to provide for a composition which can be extruded and having sufficient neck-in properties to allow for the desired coating thickness and uniformity at commercially-acceptable line speeds.

Yet another object of the invention is to provide a coating material which provides tougher seals, exhibits higher stress crack resistance and hot tack than previously provided by polyethylene.

Additional objects of the invention are to provide a method for coating the aforementioned composition and to provide for an article comprising a substrate and the aforementioned coating material.

These and other objects, advantages, and features of the present invention will become apparent as reference is made to the following detailed description, preferred embodiments, and specific examples.

### DETAILED DESCRIPTION OF THE INVENTION

The low density polyethylene used in the process of the present invention has a narrow molecular weight distribution (MWD) as reflected in a polydispersity index at or below 9. The polydispersity index defined herein after is preferably from 5.5 to 9, more preferably between 5.5 and 7.8, still more preferably between 5.5 and below 6.0, with a polydispersity index of 5.8 being most preferred. These ranges produce a coating with a surface gloss comparable to, and even better than, polypropylene.

The term "low density polyethylene" is well known and takes the ASTM meaning of 0.926 g/cc or less.

By "comparable to polypropylene" is meant a 75° Surface Gloss of at least 81, more preferably 85 and above.

The melt index of the low density polyethylene according to the present invention has a melt index, as defined hereinafter, of 0.5 to 2.0 dg/min at 190°C, preferably between 1.2 and below 2.0 dg/min. A melt index of 1.7 dg/min is most preferred. A melt index much above 2 or much below 0.5, in combination with the other polymer characteristics essential to extrusion coatability, would not permit the low density polyethylene to be extrusion coatable.

The swell ratio (defined below) of the polyethylene composition is from 1.2 to 1.35. The swell ratio of the low density polyethylene is more preferably 1.25 to 1.33 with a swell ratio of 1.3 being most preferred. A low density polyethylene with a swell ratio much above 1.35 or much below 1.2 in combination with the other polymer characteristics essential to extrusion coatability, is not extrusion coatable.

The low density polyethylene of the present invention has an annealed density (defined below) of 0.91 to 0.93 g/cc, preferably 0.915 to 0.927 g/cc, with an annealed density of 0.92 g/cc being most preferred. Low density polyethylenes having a density much above 0.93 g/cc are generally not extrusion coatable due to coating uniformity problems. Low density polyethylenes having a density much below 0.91 g/cc generally have broad molecular weight distributions which result in coatings of poor gloss.

In a preferred embodiment, the low density polyethylene has a melt index of 0.5 to below 2.0 dg/min at 190°C, a swell ratio of 1.2 to 1.35, an annealed density of 0.91 to 0.93 g/cc, and a polydispersity index of 5.5 to 9.

In another preferred embodiment, the low density polyethylene has a melt index of 0.5 to 2 dg/min at 190°C, a swell ratio of 1.2 to 1.35, an annealed density of 0.91 to 0.93 g/cc, and a polydispersity index of 5.5 to below 6.0.

Both of these two preferred embodiments especially provide for an extrusion coating having a gloss comparable to that provided by polypropylene, while at the same time providing tougher seals, exhibiting higher stress crack resistance and hot tack, and having sufficient neck-in properties.

The low density polyethylene of the present invention is preferably a low density polyethylene homopolymer, however, minor mounts of other comonomers such as propylene can be present. The amount of comonomer is preferably less than 5 mole percent. The low density polyethylene of the present invention can also be blended with minor amounts of other polymers preferably not over 5 wt. % so as not to detract from the surface gloss. In a preferred embodiment, the composition according to the present invention comprises at least 95% of a low density polyethylene homopolymer.

Suitable polyethylene materials useful in the practice of the present invention can be prepared by polymerizing relatively high purity ethylene in a stirred reactor at pressures above 1,000 atmospheres and temperatures above 200°C, using a peroxide-type catalyst, such as, for example, di-tertbutyl peroxide. Lower purity ethylene containing inert materials such as methane, ethane and carbon dioxide, may be introduced into the ethylene feed to control the purity thereof. Publications to which the reader is directed for further general details on the preparation of suitable low density polyethylenes are the text Polythene by Renfrew and Morgan, at pp. 11-17 and the article in Petroleum Refiner (1956) by Thomasson, McKetta and Ponder, found at p. 191. The artisan in possession of the present disclosure can prepare suitable polyethylene materials without undue experimentation.

The process according to the present invention entails extrusion coating a substrate with the low density polyethylene against a glossy chill roll. By extrusion coating it is meant direct application after extrusion onto a substrate with subsequent quenching on a chill roll. The glossy, or high gloss, chill roll used in the present invention has a root mean square surface finish, as defined herein after, less than 10. The glossy chill roll more preferably has a root mean square surface finish of at least 1, but no more than 6, with a root mean square surface finish of no more than 2 being most preferred. A glossy chill roll is required in order to impart a glossy finish to the coating. Thus, a chill roll with a root mean square surface finish much above 10 is not glossy and would not produce a coating with a glossy surface. However, a high gloss chill roll with a root mean square surface finish near 0 or 1 is almost impossible to produce and maintain. It also would tend to cause chill roll release problems in the extrusion coating process.

The glossy chill roll surface temperature is preferably less than 20°C, but yet higher than the environmental dew point of water. A glossy chill roll surface temperature much above 20°C permits the growth of crystals within the polymer thus detracting from a glossy finish. The condensation of water on the chill roll interferes with the surface finish of the coating; thus the chill roll cannot be too cold.

The low density polyethylene of the present invention is preferably extruded at a temperature at or above 300°C, preferably between 300 and 340°C, with a temperature between 310 and 340°C being more preferred. Extrudate temperatures within this range are important to enable extrusion coating of the present invention.

The process of the present invention also preferably entails an oxidizing step wherein the resultant coated surface is oxidized under conditions sufficient to impart a level of oxidation required for the applicable end use without detracting from surface gloss. Suitable examples of oxidation processes are flame impingement, corona discharge, and ozone exposure, with corona discharge being more preferred due to cleanliness and health considerations.

Ordinarily, the level of oxidation is such that the surface can readily receive printing, such as with the use of printing inks. This oxidation step is within the purview of the skilled artisan. In a preferred embodiment, an article according to the present invention comprises a substrate having the aforementioned high gloss polyethylene coating and further comprising printing on (and/or in) said coating. The printing may be accomplished by, for instance, the use of one or more printing inks. This printing is also within the purview of the skilled artisan.

The resulting extrusion coated article of the present invention preferably has a surface gloss greater than 81 as defined herein after. The surface gloss of the coating is more preferably greater than or equal to 85, and still more preferably greater than that provided by polypropylene, with a surface gloss greater than 90 being most preferred. A surface gloss much below 81 offers no advantage over conventional extrusion coated polyethylenes, with regard to gloss.

Polyethylenes of the present invention can contain a certain additive to enhance chill roll release during extrusion coating. Suitable chill roll release additives include erucylamide, oleamide, polyethylene glycol, calcium stearate, etc. Levels of these additives are preferably less than 0.1 wt. %.

Other additives, such as minor amounts of stabilizers, and fillers can be added to the composition of the present invention. Such materials can be present in the polyethylene composition or added just prior to the extrusion coating process.

Substrates contemplated for use in the practice of the present invention include paper, material comprised of paper, such as photographic paper and paperboard, fiber, polymeric material, and metal foil. Polymeric substrates include polyolefins or functionally modified polyolefins, polyesters or functionally modified polyesters, ethylene-vinyl alcohol copolymers or functionally modified derivatives thereof, polyamides or functionally modified polyamides, including embossed and/or oriented polymeric substrates with and without microvoiding agents/pigments such as titanium dioxide, barium sulfate, and calcium carbonate.

Extruder output rates of the extrusion coating process are not critical to the present invention. Additionally, the speeds of the extrusion coating process are not critical, but slower chill roll rotation speeds produce better gloss. However, production rates also need to be considered. The. extrusion coating details and techniques required to achieve high coating gloss and other variations of the present invention will be apparent to one of ordinary skill in possession of the present disclosure.

### EXAMPLES

The following examples are meant to illustrate the present invention. Numerous modifications and variations are possible, and it is to be understood that within the scope of the appended claims, the invention may be practiced otherwise than as specifically described herein.

In the examples the properties are determined as follows:
Melt index was determined in accordance with ASTM D1238-62T at 190°C.
Swell ratio is defined as the ratio of the diameter of the extrudate over that of the orifice diameter of the extrusion plastometer in ASTM Designation D1238-62T.
The diameter of the specimen is measured in the area between 0.159 cm and 0.952 cm of the initial portion of the specimen as it emerges from the extrusion plastometer. Measurements are made by standard methods according to ASTM Designation D-374.

Annealed density was determined in accordance with ASTM D1505.

The weight-average molecular weight, Mw, number-average molecular weight, Mn, and polydispersity index, Mw/Mn, were obtained by size-exclusion chromatography on a Waters 150°C gel permeation chromatograph equipped with the standard refractometer detector and a Viscotek 150R differential viscometer system. The 3-column set consisted of Waters' 10³, 10⁴, and linear-mixed bed (10³, 10⁵) Micro-Styragel HT columns. The samples were run as 0.125% (wt/vol) solutions in o-dichlorobenzene at 140°C. The data was interpreted using Viscotek Unical software (V4.02), by universal calibration using NBS 1475 (linear polyethylene) and NBS 1476 (branched polyethylene) for the polyethylene samples, and a 272,000 Mw, 44,000 Mn, polypropylene standard with a polydispersity of 6.3 for the polypropylene sample.

Gloss is measured at 75° and determined in accordance with ASTM D2457. Gloss or specular reflectance has been previously defined above.

Root mean square defines a surface finish in accordance with American National Standard B46.1. This test is accepted by the American Society of Automotive and Mechanical Engineers.

Data for each of the following examples were obtained by, first extrusion coating each polyolefin onto SBS (Solid Bleached Sulfate) paperboard using a metal chill roll having a very glossy surface finish of 6-rms (root mean square), rotating with a surface speed of 200-fpm (about 60 meters per minute). Each polyolefin was extruded at a molten temperature of 595-600°F (about 310-320°C) and an output rate of 5-20 lb/hr/inch of die width (0.9 kg/hr/cm). After extrusion coating, but prior to winding on the take up roll, each polymer's coating surface was electronically treated to induce oxidation, then subsequently printed. Each coating surface was subjected to a 75° (from the vertical) gloss analysis using a Gardner "Sheen" gloss meter in accordance with ASTM D2457:

Examples 1-4 were originally set forth in the aforementioned U.S. 5,350,476 and are provided here for comparison purposes.

### Example 1 (Comparative)

An extrusion coating grade polyethylene homopolymer, available from Eastman Chemical Company, Kingsport, TN., under the trademark Eastacoat 1550P, having a 3.5 dg/min melt index, a swell ratio of 1.73, an annealed density of 0.918 g/cc, and a polydispersity index of 17.0 was extrusion coated and tested as indicated above. The resultant coating exhibited a surface gloss of 79.5, and its surface accepted electronic treatment and printing.

### Example 2 (Comparative)

An extrusion coating grade polyethylene homopolymer, from Eastman Chemical Company under the trademark Eastacoat 1924P, having a 4.2-dg/min melt index, a swell ratio of 1.68, an annealed density of 0.925-g/cc, and a polydispersity index of 10.0 was extrusion coated and tested as indicated above. The resultant coating exhibited a surface gloss of 80.8, and its surface accepted electronic treatment and printing.

### Example 3 (Comparative)

An extrusion coating grade polypropylene homopolymer from Huntsman Chemical Company, identified as formula P9-015P having a 45dg/min flow rate, and a polydispersity index of 6.0 was extrusion coated and tested as indicated above. The resultant coating exhibited a surface gloss of 86.8. However, its surface did not accept electronic treatment nor did it accept printing.

### Example 4 (Comparative)

A film grade low density polyethylene homopolymer from Eastman Chemical Company under the Trademark TENITE 1840F having the following unique properties; a 2.5-dg/min melt index, a swell ratio of 1.26, an annealed density of 0.926-g/cc, and a polydispersity index of 7.0 was extrusion coated and tested as indicated above.

The resulting coating was uniform with no observed edge weave. The coating exhibited a surface gloss of 90.4, superior to the polypropylene of Example 3. The coating surface of this material accepted electronic treatment and printing, unlike polypropylene.

### Example 5

A film grade low density polyethylene homopolymer from Eastman Chemical Company under the Trademark TENITE 1830F having the following unique properties; a 1.7-dg/min melt index, a swell ratio of 1.3, an annealed density of 0.92-g/cc, and a polydispersity index of 5.8 was extrusion coated and tested as indicated above.

Surprisingly, this composition exhibited superior neck-in properties during extrusion, providing a uniform coating with no observed edge weave. This was unexpected, since it was thought that such a material having a low melt index and low swell ratio would exhibit neck-in problems. Moreover, the coating exhibited superior stress crack resistance, and superior hot tack, when compared with the material of Example 4. Even more surprisingly, the coating unexpectedly exhibited a surface gloss of 88.0, superior to the polypropylene of Example 3. The coating surface of this material accepted electronic treatment and printing, unlike polypropylene.

### Example 6

A film grade low density polyethylene homopolymer from Eastman Chemical Company under the Trademark TENITE 1810F having the following unique properties: a 0.5-dg/min melt index, a swell ratio of 1.3, an annealed density of 0.921-g/cc, and a polydispersity index of 9.0 was extrusion coated and tested as indicated above.

Again, this composition surprisingly exhibited superior neck-in properties during extrusion, providing a uniform coating with no observed edge weave. Moreover, the coating also exhibited superior stress crack resistance, and superior hot tack, when compared with the material of Example 4. The coating exhibited a surface gloss 85.0, which compare favorably to the polypropylene of Example 3. The coating surface of this material accepted electronic treatment and printing, unlike polypropylene.

Pertinent properties of the polyolefins and resultant coatings along with the method of determination are illustrated below in Table 1.

**TABLE 1**

| Surface Gloss Vs Polydispersity Index Vs Swell Ratio | | | | | | |
|---|---|---|---|---|---|---|
| Polyolefin | 75° Surface Index | PI* | MI** | Swell Ratio | M_{w} | Mₙ |
| Example 1 | 79.5 | 17.0 | 3.5 | 1.73 | 350,000 | 20,000 |
| Example 2 | 80.8 | 10.0 | 4.2 | 1.65 | 150,000 | 15,000 |
| Example 3 | 86.8 | 6.0 | - | - | 200,000 | 33,000 |
| Example 4 | 90.4 | 7.0 | 2.5 | 1.26 | 140,000 | 20,000 |
| Example 5 | 88.0 | 5.8 | 1.7 | 1.30 | 151,000 | 26,000 |
| Example 6 | 85.0 | 9.0 | 0.5 | 1.30 | 205,000 | 23,000 |

| | | | | | | |
|---|---|---|---|---|---|---|
| *PI = polydispersity index | | | | | | |
| **MI = melt index | | | | | | |

It is completely unexpected that a low density polyethylene material having a melt index below 2.0, as shown by Examples 5 and 6, would provide a gloss comparing favorably with polypropylene (Example 3), while at the same time exhibiting a more uniform coating, providing tougher seals, higher stress crack resistance, and superior hot tack, when compared with Example 4. These are important properties when the coating is used in packaging such as milk cartons and the like.

The invention has been described above in detail with particular reference to preferred embodiments thereof, but it will be understood that variations and modifications other than as specifically described herein can be effected within the spirit and scope of the invention. Moreover, all patents and literature references or other publications noted above are incorporated herein by reference for any disclosure pertinent to the practice of this invention.

## Claims

1. An extrusion coating process comprising extrusion coating a low density polyethylene onto a substrate against a glossy chill roll, said polyethylene having a melt index of 0.5 to less than 2 dg/min at 190°C, a swell ratio of 1.2 to 1.35, an annealed density of 0.91 to 0.93 g/cc, and a polydispersity index of 5.5 to 9.

2. The extrusion coating process according to Claim 1, wherein the low density polyethylene has a melt index of 1.2 to below 2 dg/min, and a polydispersity index of 5.5 to less than 6.0.

3. The extrusion coating process according to Claim 1, wherein the low density polyethylene has a melt index of 1.7 dg/min.

4. The extrusion coating process according to Claim 1, wherein the low density polyethylene has a melt index of 0.5 dg/min.

5. The extrusion coating process according to Claim 1, wherein the low density polyethylene has a melt index of 1.2 to less than 2.0 dg/min, a swell ratio of 1.25 to 1.33, and an annealed density of 0.915 to 0.927 g/cc.

6. The extrusion coating process according to Claim 1, wherein the glossy chill roll has a root mean square surface finish less than 10.

7. The extrusion coating process according to Claim 5, wherein the glossy chill roll has a root mean square surface finish of at least 1, but no more than 6.

8. The extrusion coating process according to Claim 6, wherein the glossy chill roll has a root mean square surface finish of no more than 2.

9. The extrusion coating process according to Claim 1, wherein the glossy chill roll surface temperature is less than 20°C, but higher than the environmental dew point of water.

10. The extrusion coating process according to Claim 1, wherein the low density polyethylene is extruded at a temperature between 300°C and 340°C.

11. The extrusion coating process according to Claim 1, further including an oxidation step comprising oxidizing the resultant coated substrate under conditions sufficient to impart surface oxidation to the polyethylene coating.

12. The extrusion coating process according to Claim 11, wherein said oxidation step includes oxidizing by direct flame impingement, corona discharge, or ozone exposure.

13. An extrusion coated article including a substrate and a high gloss coating, wherein said high gloss coating comprises a coating produced by extrusion coating a low density polyethylene onto a substrate against a glossy chill roll, said polyethylene having a melt index of 0.5 to below 2.0 dg/min at 190°C, a swell ratio of 1.2 to 1.35, an annealed density of 0.91 to 0.93 g/cc, and a polydispersity index of 5.5 to 9, said coating having a surface gloss of 85 or higher measured at 75°.

14. The extrusion coated article according to Claim 13, wherein said coating comprises a low density polyethylene having a melt index of 0.5.

15. The extrusion coated article according to Claim 13, wherein said coating comprises a low density polyethylene having a melt index of 1.7.

16. The extrusion coated article according to Claim 13, wherein said substrate is paper or material comprised of paper, fiber, polymeric material, or metal foil.

17. The extrusion coated article according to Claim 13, further comprising printing ink on said high gloss coating.

18. An extrusion coating composition comprising at least 95% by weight of a low density polyethylene homopolymer, said low density polethylene homopolymer having a melt index of 0.5 to less than 2 dg/min at 190°C, a swell ratio of 1.2 to 1.35, an annealed density of 0.91 to 0.93 g/cc, and a polydispersity index of 5.5 to 9.

## Patentansprüche

1. Extrusionsbeschichtungsverfahren, umfassend die Extrusionsaufbringung eines Polyethylens niedriger Dichte auf ein Substrat gegen eine blanke Kühlwalze, wobei das Polyethylen einen Schmelzindex von 0,5 bis weniger als 2 dg/min bei 190°C, ein Quellverhältnis von 1,2 bis 1,35, eine getemperte Dichte von 0,91 bis 0,93 g/cm³ und einen Polydispersitätsindex von 5,5 bis 9 aufweist.

2. Extrusionsbeschichtungsverfahren nach Anspruch 1, in dem das Polyethylen niedriger Dichte einen Schmelzindex von 1,2 bis unterhalb 2 dg/min und einen Polydispersitätsindex von 5,5 bis weniger als 6,0 aufweist.

3. Extrusionsbeschichtungsverfahren nach Anspruch 1, in dem das Polyethylen niedriger Dichte einen Schmelzindex von 1,7 dg/min aufweist.

4. Extrusionsbeschichtungsverfahren nach Anspruch 1, in dem das Polyethylen niedriger Dichte einen Schmelzindex von 0,5 dg/min aufweist.

5. Extrusionsbeschichtungsverfahren nach Anspruch 1, in dem das Polyethylen niedriger Dichte einen Schmelzindex von 1,2 bis weniger als 2,0 dg/min, ein Quellverhältnis von 1,25 bis 1,33 und eine getemperte Dichte von 0,915 bis 0,927 g/cm³ aufweist.

6. Extrusionsbeschichtungsverfahren nach Anspruch 1, in dem die blanke Kühlwalze ein quadratisches Mittel der Oberflächengüte von weniger als 10 aufweist.

7. Extrusionsbeschichtungsverfahren nach Anspruch 6, in dem die blanke Kühlwalze ein quadratisches Mittel der Oberflächengüte von mindestens 1, aber nicht mehr als 6 aufweist.

8. Extrusionsbeschichtungsverfahren nach Anspruch 6, in dem die blanke Kühlwalze ein quadratisches Mittel der Oberflächengüte von nicht mehr als 2 aufweist.

9. Extrusionsbeschichtungsverfahren nach Anspruch 1, in dem die Oberflächentemperatur der blanken Kühlwalze weniger als 20°C, aber mehr als der Umgebungstaupunkt von Wasser beträgt.

10. Extrusionsbeschichtungsverfahren nach Anspruch 1, in dem das Polyethylen niedriger Dichte bei einer Temperatur zwischen 300°C und 340°C extrudiert wird.

11. Extrusionsbeschichtungsverfahren nach Anspruch 1, weiter einschließend einen Oxidationsschritt, welcher das Oxidieren des resultierenden beschichteten Substrats unter Bedingungen umfasst, die ausreichen, um der Polyethylen-Beschichtung eine Oberflächenoxidation zu verleihen.

12. Extrusionsbeschichtungsverfahren nach Anspruch 11, in dem der Oxidationsschritt eine Oxidation durch direkte Flammeneinwirkung, Korona-Entladung oder Ozon-Einwirkung einschließt.

13. Extrusionsbeschichteter Gegenstand, umfassend ein Substrat und eine Hochglanzbeschichtung, bei dem die Hochglanzbeschichtung eine Beschichtung umfasst, die durch Extrusionsaufbringung eines Polyethylens niedriger Dichte auf ein Substrat gegen eine blanke Kühlwalze erzeugt wurde, wobei das Polyethylen einen Schmelzindex von 0,5 bis unterhalb 2,0 dg/min bei 190°C, ein Quellverhältnis von 1,2 bis 1,35, eine getemperte Dichte von 0,91 bis 0,93 g/cm³ und einen Polydispersitätsindex von 5,5 bis 9 aufweist, wobei die Beschichtung einen Oberflächenglanz von 85 oder mehr, gemessen bei 75°C, aufweist.

14. Extrusionsbeschichteter Gegenstand nach Anspruch 13, bei dem die Beschichtung ein Polyethylen niedriger Dichte mit einem Schmelzindex von 0,5 umfasst.

15. Extrusionsbeschichteter Gegenstand nach Anspruch 13, in dem die Beschichtung ein Polyethylen niedriger Dichte mit einem Schmelzindex von 1,7 umfasst.

16. Extrusionsbeschichteter Gegenstand nach Anspruch 13, in dem das Substrat Papier oder ein Material ist, das Papier, Faser, polymeres Material oder Metallfolie umfasst.

17. Extrusionsbeschichteter Gegenstand nach Anspruch 13, weiter umfassend Drucktinte auf der Hochglanzbeschichtung.

18. Extrusionsbeschichtungs-Zusammensetzung, umfassend mindestens 95 Gewichts-% eines Polyethylen-Homopolymers niedriger Dichte, wobei das Polyethylen-Homopolymer niedriger Dichte einen Schmelzindex von 0,5 bis weniger als 2 dg/min bei 190°C, ein Quellverhältnis von 1,2 bis 1,35, eine getemperte Dichte von 0,91 bis 0,93 g/cm³ und einen Polydispersitätsindex von 5,5 bis 9 aufweist.

## Revendications

1. procédé de revêtement par extrusion comprenant le revêtement par extrusion d'un polyéthylène à basse densité sur un substrat contre un rouleau de refroidissement brillant, ledit polyéthylène ayant un indice de fusion de 0,5 à moins de 2 dg/min à 190 °C, un taux de gonflement de 1,2 à 1,35, une densité de recuit de 0,91 à 0,93 g/cc, et un indice de polydispersité de 5,5 à 9.

2. procédé de revêtement par extrusion selon la revendication 1, dans lequel le polyéthylène à basse densité a un indice de fusion de 1,2 à moins de 2 dg/min, et un indice de polydispersité de 5,5 à moins de 6,0.

3. procédé de revêtement par extrusion selon la revendication 1, dans lequel le polyéthylène à basse densité a un indice de fusion de 1,7 dg/min.

4. Procédé de revêtement par extrusion selon la revendication 1, dans lequel le polyéthylène à basse densité a un indice de fusion de 0,5 dg/min.

5. Procédé de revêtement par extrusion selon la revendication 1, dans lequel le polyéthylène à basse densité a un indice de fusion de 1,2 à moins de 2,0 dg/min, un taux de gonflement de 1,25 à 1,33, et une densité de recuit de 0,915 à 0,927 g/cc.

6. Procédé de revêtement par extrusion selon la revendication 1, dans lequel le rouleau de refroidissement brillant a une finition de surface de moyenne quadratique de moins de 10.

7. Procédé de revêtement par extrusion selon la revendication 5, dans lequel le rouleau de refroidissement brillant a une finition de surface de moyenne quadratique d'au moins 1 mais pas supérieure à 6.

8. Procédé de revêtement par extrusion selon la revendication 6, dans lequel le rouleau de refroidissement brillant a une finition de surface de moyenne quadratique qui n'est pas supérieure à 2.

9. Procédé de revêtement par extrusion selon la revendication 1, dans lequel la température de surface du rouleau de refroidissement brillant est de moins de 20 °C, mais supérieure à la température de condensation de l'eau dans l'environnement.

10. Procédé de revêtement par extrusion selon la revendication 1, dans lequel le polyéthylène à basse densité est extrudé à une température comprise entre 300 °C et 340 °C.

11. Procédé de revêtement par extrusion selon la revendication 1 comprenant de plus une opération d'oxydation comprenant l'oxydation du substrat enduit résultant dans des conditions suffisantes pour réaliser une oxydation de surface de l'enduit de polyéthylène.

12. Procédé de revêtement par extrusion selon la revendication 1, dans lequel ladite opération d'oxydation comprend l'oxydation par jet de flamme direct, par décharge par effet de couronne, ou par exposition à l'ozone.

13. Objet revêtu par extrusion comprenant un substrat et un revêtement de brillance élevée, dans lequel ledit revêtement de brillance élevée comprend un revêtement produit par revêtement par extrusion d'un polyéthylène à basse densité sur un substrat contre un rouleau de refroidissement brillant, ledit polyéthylène ayant un indice de fusion de 0,5 à moins de 2,0 dg/min à 190 °C, un taux de gonflement de 1,2 à 1,35, une densité de recuit de 0,91 à 0,93 g/cc, et un indice de polydispersité de 5,5 à de 9, ledit revêtement ayant un brillant de surface de 85 ou plus mesuré à 75 °C.

14. Objet revêtu par extrusion selon la revendication 13 dans lequel ledit revêtement comprend un polyéthylène à basse densité ayant un indice de fusion de 0,5.

15. Objet revêtu par extrusion selon la revendication 13, dans lequel ledit revêtement comprend un polyéthylène à basse densité ayant un indice de fusion de 1,7.

16. Objet revêtu par extrusion selon la revendication 13, dans lequel ledit substrat est du papier ou un matériau tel qu'une feuille de papier, de fibres, de matériau polymère ou métallique.

17. Objet revêtu par extrusion selon la revendication 13, comprenant en outre de l'encre d'imprimerie sur ledit revêtement de brillance élevée.

18. Composition de revêtement par extrusion comprenant au moins 95 % en poids d'un homopolymère de polyéthylène à basse densité, ledit homopolymère de polyéthylène à basse densité ayant un indice de fusion de 0,5 à moins de 2 dg/min à 190 °C, un taux de gonflement de 1,2 à 1,35, une densité de recuit de 0,91 à 0,93 g/cc et un indice de polydispersité de 5,5 à 9.
